# FASCICULE DE BREVET EUROPEEN

(11) **EP 4 608 213 B1**
(45) Date de publication et mention de la délivrance du brevet: **09.09.2026**
(21) Numéro de dépôt: 23806352.3
(22) Date de dépôt: 20.10.2023
(51) Int. Cl.: A47J 27/00, A47J 36/32, A47J 43/046, A47J 44/00

(54) **SYSTÈME AUTOMATIQUE DE PRÉPARATION ALIMENTAIRE COMPRENANT UN RÉCIPIENT AVEC DES ÉLÉMENTS DE RELIEF, ET AU MOINS UNE BUSE DE PROJECTION DE FLUIDE**
AUTOMATISCHES LEBENSMITTELZUBEREITUNGSSYSTEM MIT EINEM BEHÄLTER MIT ENTLASTUNGSELEMENTEN UND MINDESTENS EINER FLÜSSIGKEITSSPRÜHDÜSE
AUTOMATIC FOOD PREPARATION SYSTEM COMPRISING A CONTAINER WITH RELIEF ELEMENTS, AND AT LEAST ONE FLUID SPRAY NOZZLE

(30) Priorité: 27.10.2022 FR 2211213
(43) Date de publication de la demande: 03.09.2025
(73) Titulaire: Cook-E, 75011 Paris (FR)
(72) Inventeur: GUILLEUS, Quentin, PARIS 75011 (FR); HO FUH, Ludovic, 75011 PARIS (FR); DUC, Quentin, 75011 PARIS (FR); COSTERMANS, Luc, 75011 PARIS (FR); SMADJA, Xavier, 75011 PARIS (FR)
(74) Mandataire: Santarelli
(86) Numéro de dépôt international: PCT/FR2023/051651
(87) Numéro de publication internationale: WO 2024/089348

(56) Documents cités:
- WO-A1-2021/031483
- CN-A- 108 175 310
- CN-A- 112 386 138
- CN-A- 112 438 593
- FR-A1- 3 112 932
- KR-A- 20210 128 763

## Description

### DOMAINE TECHNIQUE DE L'INVENTION

Le domaine de l'invention est celui du matériel de cuisine, et plus particulièrement celui des systèmes automatiques de préparation alimentaire.

L'invention concerne un système automatique de préparation alimentaire comprenant un récipient avec des éléments de relief, et au moins une buse de projection de fluide. L'invention concerne également un procédé de déversement d'un aliment depuis un récipient vers un module de cuisson, mise en œuvre par un tel système.

L'invention trouve notamment des applications dans le domaine de la restauration, des cuisines collectives et plus largement dans tout type d'activité nécessitant une préparation de nourriture en grande quantité.

### ÉTAT DE LA TECHNIQUE

Il est connu de l'art antérieur des techniques de systèmes automatiques de préparation alimentaire, comprenant au moins un récipient pouvant contenir des aliments destinés à être cuisinés. En général, les aliments sont déversés par gravité dans un module de cuisson, tel qu'une casserole, pour y être cuisinés.

Une telle technique n'est pas toujours pleinement satisfaisante, dans la mesure où il ne peut pas être assuré que l'intégralité des aliments contenus dans le récipient soient déversés dans un module de cuisson.

Il en résulte la nécessité de palier le déversement incomplet, par exemple manuellement, ce qui est chronophage et va à l'encontre d'une préparation alimentaire automatique.

Lorsque le système est entièrement automatisé et qu'aucune intervention externe n'est possible ou souhaitée, il en résulte des préparations alimentaires réalisées de manière incomplète.

Ces situations sont particulièrement préjudiciables en termes de rendement et de coûts du système automatique de préparation alimentaire, ainsi qu'en termes de qualité nutritive des plats préparés et de satisfaction des individus dégustant ces plats.

### EXPOSÉ DE L'INVENTION

La présente invention vise à remédier à tout ou partie des inconvénients de l'état de la technique cités ci-dessus.

À cet effet, l'invention vise un système automatique de préparation alimentaire comprenant un ou plusieurs modules de cuisson comportant une ouverture d'introduction d'aliments, et un module d'acheminement d'aliments comprenant au moins un récipient, le module d'acheminement d'aliments étant adapté pour positionner le récipient sensiblement en vis-à-vis de l'ouverture d'introduction d'aliments d'un module de cuisson, et le récipient étant inclinable selon un axe déversement, de façon à pouvoir déverser des aliments qu'il contient dans un module de cuisson à travers l'ouverture d'introduction d'aliments, dans une position de déversement du récipient.

Un système de préparation de ce type est par exemple connu de la demande de brevet des inventeurs de la présente demande, publiée sous le numéro FR 3112932.

L'au moins un récipient comporte, sur au moins une face intérieure, une pluralité d'éléments de relief disposés entre une ouverture du récipient et un fond du récipient, et le système comporte également au moins un module de projection comprenant au moins une buse de projection de fluide orientée en direction d'un récipient lorsque celui-ci est en position de déversement, de manière à favoriser le décollement d'un aliment de ladite au moins une face intérieure du récipient par la projection d'au moins un jet de fluide s'introduisant dans un espace entre ladite au moins une face intérieure dudit récipient, et ledit aliment en contact avec ladite au moins une face intérieure et au moins un desdits éléments de relief.

Ainsi, par la synergie des éléments de relief du récipient et la projection de fluide, un décollement particulièrement efficace d'aliments contenus dans le récipient est obtenu.

Les éléments de relief peuvent être de divers type, et former des aspérités ponctuelles ou encore continues sur une face intérieure du récipient. Différents types d'éléments de relief peuvent être prévus sur une même face intérieure, ou bien un unique type d'élément de reliefs peut être prévu.

Les éléments de relief permettent d'une part d'éviter un effet dit « ventouse » de certains ingrédients, en particulier des aliments humides du type viande crue, ou crudités découpées en rondelles.

D'autre part, les éléments de relief permettent de former des espaces de passage entre un aliment et une face intérieure du récipient, dans la mesure où l'aliment n'est pas en contact avec une surface plane, mais avec une surface à relief.

L'au moins une buse de projection est orientée de façon à projeter un jet de fluide vers l'intérieur du récipient. La buse de projection est actionnée notamment lorsque l'on souhaite déverser des aliments contenus dans le récipient vers un module de cuisson.

La buse de projection permet de faire circuler du fluide entre les aliments et les faces intérieures du récipient. En effet, le fluide peut s'introduire dans les espaces de passage entre une face intérieure du récipient et un aliment, ce qui a pour effet de favoriser le décollement de l'aliment de la face intérieure.

Sans la présence d'un espace dans lesquels le fluide peut s'introduire, le fluide ne peut à lui seul pas décoller des aliments qui sont collés sur la surface intérieure du récipient de manière satisfaisante.

Ainsi, on comprend que par la coopération des éléments de relief avec le ou les jets de fluide, un décollement efficace des aliments est obtenu.

Ceci permet un fonctionnement optimal du système automatique de préparation alimentaire, et permet de préparer des recettes culinaires avec précision et sans intervention externe pour s'assurer du bon fonctionnement du système.

De plus, la génération de déchets alimentaires est grandement réduite, et la qualité gustative des plats préparés est améliorée.

D'autres caractéristiques particulièrement avantageuses du système selon l'invention sont décrites ci-après.

Les éléments de relief s'étendent sensiblement depuis l'ouverture du récipient jusqu'au fond du récipient.

Ainsi, l'au moins une face intérieure comporte des éléments de relief répartis sur ladite face intérieure, ce qui est particulièrement efficace pour pouvoir décoller des aliments indépendamment de leur localisation.

Les éléments de relief sont des nervures et/ou rainures s'étendant chacune sensiblement depuis l'ouverture du récipient jusqu'au fond du récipient.

Les nervures et/ou rainures sont un type d'éléments de relief particulièrement efficaces pour décoller des aliments, notamment en ce qui regarde la durée de projection de fluide nécessaire au décollement d'aliments, ou encore en ce qui regarde la pression nécessaire au décollement d'aliments.

Le récipient comprend entre dix et vingt nervures et/ou rainures réparties sur l'ensemble des faces intérieures du récipient.

Un tel nombre d'éléments de relief permet d'obtenir un effet de décollement particulièrement important, en combinaison avec un jet de fluide.

Le récipient comprend deux faces intérieures principales opposées et deux faces intérieures latérales opposées, et entre quatre et huit nervures et/ou rainures sont disposées sur chacune des faces intérieures principales, et une à deux nervures et/ou rainures sont disposées sur chacune des faces intérieures latérales.

Une telle disposition est particulièrement efficace, en combinaison avec un jet de fluide.

De plus, la section du récipient est alors sensiblement oblongue, et les aliments sont préférentiellement déversés par une face intérieure principale.

Chacune des faces intérieures principales possède une section sensiblement en forme de V, formant une rigole centrale sur chaque face intérieure principale, les nervures et/ou rainures sur chacune des faces intérieures principales étant disposées en nombre égal de part et d'autre de la rigole centrale.

Ainsi, le déversement par la face intérieure principale peut être davantage facilité encore. De plus, l'introduction d'aliments dans le récipient est également facilitée. Le récipient peut également être utilisé selon deux directions d'inclinaison différentes.

Le récipient comprend uniquement des nervures.

Les nervures sont un type d'éléments de relief particulièrement efficace pour le décoller des aliments, et qui présente en plus l'avantage d'un nettoyage simplifié.

L'au moins un module de projection de fluide comprend au moins deux buses de projection orientées dans des directions distinctes, une première buse de projection étant orientée sensiblement en direction d'une première face intérieure du récipient lorsque celui-ci est en position de déversement et une deuxième buse de projection étant orientée sensiblement en direction d'une deuxième face intérieure du récipient, opposée à la première face intérieure, lorsque celui-ci est en position de déversement.

Ainsi, chacune des faces intérieures peut être balayée ou affleurée par un jet de fluide. La possibilité de projeter du fluide sur deux faces différentes permet de mélanger le fluide à l'intérieur du récipient, et de décoller plus efficacement des aliments.

Le système comprend une unité de commande configurée de sorte que la première buse de projection et la deuxième buse de projection projettent des jets de fluide en alternance.

L'effet de décollement est renforcé par l'alternance des jets de fluide, qui sont projetés sur une face, puis sur l'autre en alternance.

Au moins un module de projection de fluide est configuré pour pouvoir projeter du fluide en sortie d'au moins une des buses de projection dudit module de projection de fluide au moins à une première pression de sortie dite inférieure et à une seconde pression de sortie dite supérieure.

Ainsi, selon le type d'aliment à décoller, notamment selon leur poids, au moins l'un ou l'autre des pressions de projection de fluide peut être utilisée. Un premier niveau de pression plus élevé est réservé à des aliments plus lourds et/ou collants, tel qu'un morceau de volaille crue, et un second niveau de pression de niveau plus faible est réservé à des aliments plus légers et/ou moins collants, tel que des crudités découpées en morceaux par exemple. Des niveaux de pressions intermédiaires peuvent être prévus pour ajuster plus finement le force du décollage de différents aliments selon leurs caractéristiques.

Au moins une buse de projection est de type buse à jet plat ou lame, de façon à projeter un jet de fluide plat affleurant au moins une face intérieure du récipient, de manière à favoriser le décollement d'un aliment adhérant à une face intérieure du récipient.

De telles buses permettent de décoller particulièrement efficacement des aliments, la lame de fluide agissant sensiblement comme une lame mécanique décollant les aliments.

Au moins une buse de projection est de type mobile, préférentiellement de type buse rotative.

Ce type de buse est également particulièrement efficace pour décoller des aliments.

Au moins une buse de projection est une buse de projection d'air.

L'air a pour avantage d'être efficace pour décoller des aliments, d'être compatible sanitairement avec des produits alimentaires, et d'être peu cher et disponible aisément.

Le fond du récipient possède une forme concave arrondie, de façon à favoriser la circulation d'un jet de fluide à l'intérieur du récipient.

Ce type de forme permet de faire recirculer le fluide dans le fond du récipient, ce qui améliore le brassage de fluide et ainsi le décollement des aliments.

Selon un autre aspect, l'invention a également pour objet un procédé de déversement d'un aliment depuis un récipient vers un module de cuisson, mis en oeuvre par un système selon l'une quelconque des revendications précédentes, comprenant les étapes de :
- disposition d'un récipient du module d'acheminement d'aliments sensiblement en vis-à-vis de l'ouverture d'introduction d'aliments d'un module de cuisson ;
- inclinaison du récipient autour de son axe de déversement, en direction du module de cuisson ;
- projection d'un jet de fluide en direction du récipient par au moins une buse de projection,
de manière à manière à favoriser le décollement d'un aliment d'au moins une face intérieure du récipient.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
- La **figure 1** est une vue en perspective d'une partie d'un système automatique de préparation alimentaire selon un premier mode de réalisation,
- La **figure 2** est une vue en perspective du récipient du module d'acheminement d'aliments,
- La **figure 3** est une vue de dessus du récipient de la figure 2,
- La **figure 4** est une vue en perspective de détail d'une nervure du récipient des figures 2 et 3,
- La **figure 5** est une vue en perspective de détail du système automatique de la figure 1, pris selon un angle différent,
- La **figure 6** est une vue en coupe du système automatique de la figure 1,
- La **figure 7** est une vue en perspective d'une partie d'un système automatique de préparation alimentaire selon un deuxième mode de réalisation,
- La **figure 8** est une vue en perspective de détail du système automatique de la figure 7, pris selon un angle différent,
- La **figure 9** est une vue en coupe du système automatique de la figure 8,
- La **figure 10** est une vue arrière partielle du système automatique de la figure 7,
- La **figure 11** est une vue en coupe du récipient de la figure 2, en position de déversement,
- La **figure 12** est un schéma synoptique d'un procédé de déversement d'un aliment depuis le récipient vers un module de cuisson.

### DESCRIPTION DÉTAILLÉE DE L'INVENTION

La présente description est donnée à titre non limitatif, chaque caractéristique d'un mode de réalisation pouvant être combinée à toute autre caractéristique de tout autre mode de réalisation de manière avantageuse.

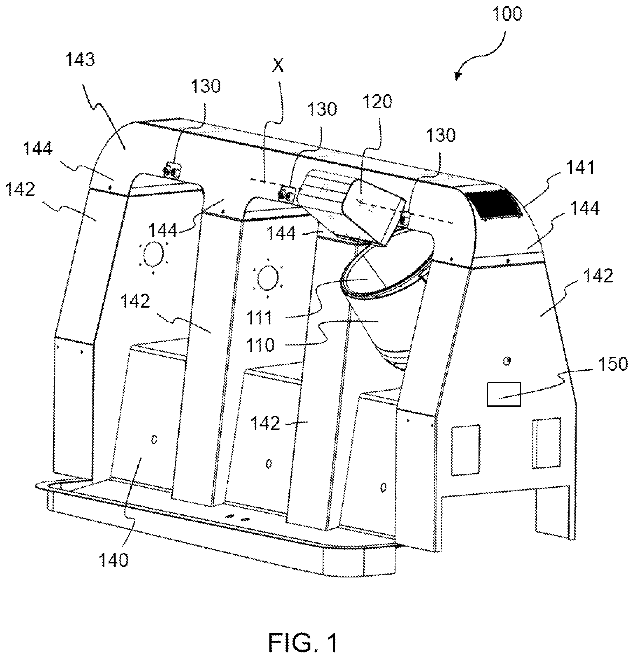

La figure 1 illustre une partie d'un système automatique 100 de préparation alimentaire selon un premier mode de réalisation.

Le système automatique 100 comprend un ou plusieurs modules de cuisson 110, et ici en particulier trois modules de cuisson 110, dont un seul est représenté sur la figure 1.

Le système automatique 100 comporte également un module d'acheminement d'aliments (non représenté intégralement), comprenant au moins un récipient 120. Seul le récipient 120 du module d'acheminement d'aliments est représenté à la figure 1, pour des raisons de simplicité. Le récipient 120 est adapté pour contenir des aliments destinés à être cuisinés. Ces aliments peuvent par exemple provenir d'un module de stockage et de distribution d'aliments (non représenté) du système automatique 100. Le récipient 120 est par exemple configuré pour effectuer une pesée des aliments en vue de leur préparation culinaire.

Le module d'acheminement d'aliments peut par exemple comprendre un agencement de rails disposés selon deux axes distincts, permettant de déplacer le récipient 120 depuis un module de stockage et de distribution d'aliments vers un module de cuisson 110 distant.

Par exemple, le module de stockage et de distribution d'aliments peut comprendre une étagère de stockage d'aliments comprenant un ou plusieurs récipients, notamment réfrigérés, par exemple équipés de moyens de distribution.

Par exemple, le système automatique 100 peut comprendre un châssis, mobile ou non, sur lequel est monté le module de stockage et de distribution d'aliments ainsi que le module d'acheminement d'aliments.

Par exemple, le châssis peut être réalisé en deux parties connectables notamment mécaniquement et/ou électriquement. Une deuxième partie, comportant notamment les modules de cuisson 110 est représentée sur la figure 1, tandis que pour une deuxième partie, comportant notamment le module d'acheminement d'aliments, seul le récipient 120 est représenté.

Le module de cuisson 110 comprend une ouverture 111 d'introduction d'aliments. Le module de cuisson 110 peut par exemple être une casserole.

Le module d'acheminement d'aliments est adapté pour positionner le récipient 120 sensiblement en vis-à-vis de l'ouverture 111 d'introduction d'aliments d'un module de cuisson 110.

Le récipient 120 est inclinable selon un axe déversement X (représenté en trait discontinu sur les figures), de façon à pouvoir déverser des aliments qu'il contient dans un module de cuisson 110 à travers l'ouverture 111 d'introduction d'aliments, dans une position de déversement du récipient 120. Une telle position de déversement est illustrée notamment à la figure 1.

Il convient de préciser que le système automatique 100 peut comprendre une unité centrale configurée pour commander le système de manière automatisée, par exemple en réponse la réception d'une instruction de réalisation d'une recette préalablement enregistrée dans une mémoire de stockage de l'unité centrale.

Un tel système automatique 100 est par exemple décrit dans la demande de brevet publiée sous le numéro FR 3112932, réalisée par les inventeurs de la présente invention.

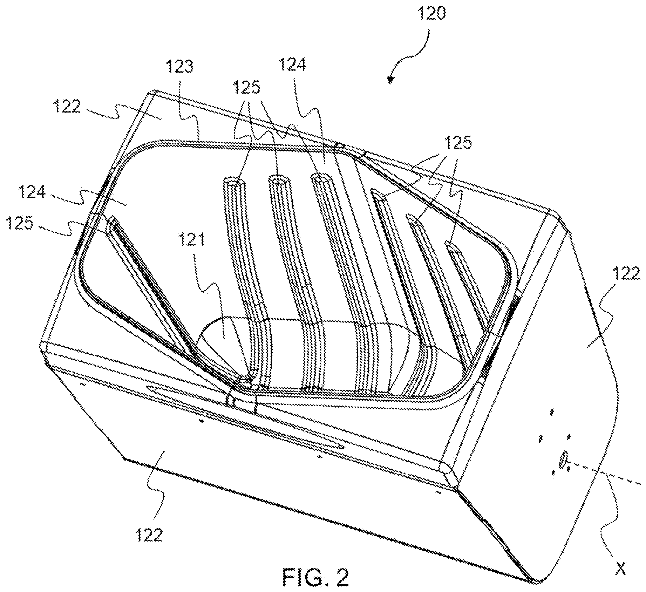

Le récipient 120 comporte un fond 121, des parois latérales 122 et une ouverture 123, tel que cela est visible plus en détail sur la figure 2, qui représente le récipient 120 pris isolément.

Le récipient 120 prend ainsi la forme générale d'un godet.

La forme extérieure du récipient 120 est par exemple sensiblement parallélépipédique rectangle, comme illustré sur la figure 2, toutefois toute autre forme adaptée peut être choisie également. La forme intérieure du récipient 120 est par exemple sensiblement prismatique, par exemple hexagonal, comme illustré sur la figure 2. La forme intérieure du récipient 120 peut toutefois également être cylindrique circulaire, ou encore hémisphérique, conique, ou cubique, par exemple.

Quelle que soit sa forme intérieure, le récipient 120 comporte au moins une face intérieure 124.

Ici, le récipient 120 comporte quatre faces intérieures 124 latérales, le fond 121 correspondant à une cinquième face intérieure 124. Les faces 124 peuvent être reliées de façon continue par des congés, par exemple, tel que cela est illustré sur la figure 2.

On précise ici que le récipient 120 peut être composé d'une enveloppe externe, par exemple en acier inoxydable ou en plastique, et d'une enveloppe interne.

L'enveloppe interne comporte ainsi les faces intérieures 124 destinées à entrer en contact avec un aliment. L'enveloppe interne peut être réalisée en thermoplastique, par exemple en polyester glycol (PETG), qui a des propriétés antiadhésives. Elle peut également être revêtue d'un revêtement tel que le polytétrafluoroéthylène (PTFL) ou autre revêtement antiadhésif.

En d'autres termes, les faces intérieures 124, qu'elles soient revêtues ou non, possèdent des propriétés antiadhésives. Ainsi, les aliments contenus dans le récipient 120 sont déversés efficacement lorsque le récipient 120 est en position de déversement.

De plus, le récipient 120 comporte, sur au moins une face intérieure 124 du récipient 120, une pluralité d'éléments de relief.

Un élément de relief peut être une nervure 125, tel que représenté sur la figure 2, ou encore une rainure (non représenté). Ainsi, le récipient 120 peut notamment comporter uniquement des nervures 125, tel que c'est le cas pour l'exemple illustré, uniquement des rainures (non représenté), ou encore un mélange de nervures et de rainures (non représenté).

Les nervures 125 ont pour avantage de permettre un nettoyage plus simple du récipient 120, les aliments ayant moins tendance à s'incruster sur les faces intérieures 124, que lorsque des rainures sont utilisées.

Les éléments de relief s'étendent chacun sensiblement depuis l'ouverture 123 du récipient 120 jusqu'au fond 121 du récipient 120. Les éléments de relief s'étendent ici également sur le fond 121 du récipient 120.

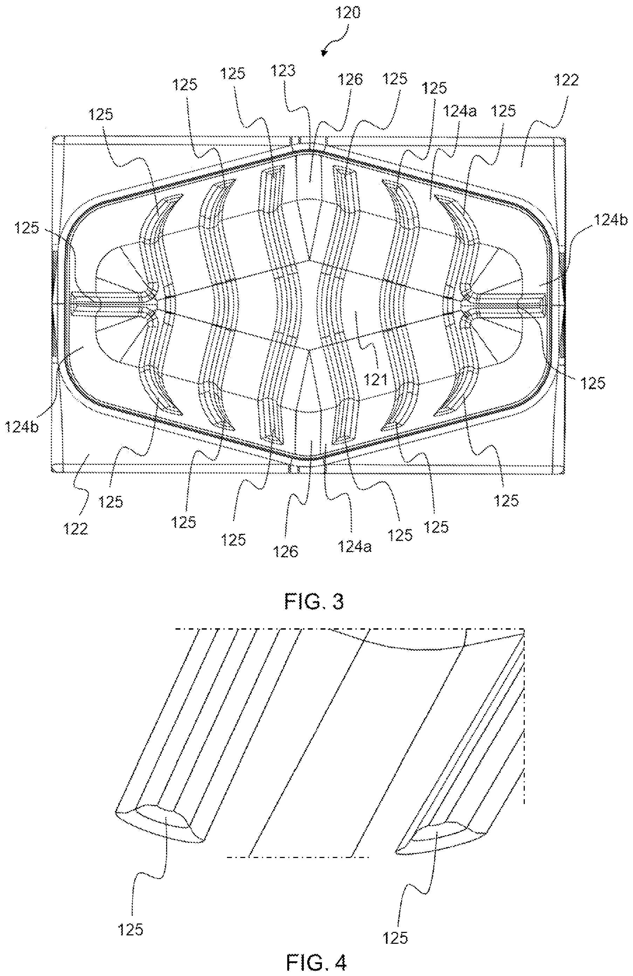

Tel que cela est visible sur les figures 2 et 3, ici les nervures 125 s'étendent sensiblement depuis une position en retrait des bords de l'ouverture 123 du récipient 120.

Les nervures 125 sont sensiblement longilignes, et peuvent être légèrement courbées, notamment en forme de S. Les nervures 125 s'étendent ici jusqu'au fond 121 du récipient 120. Dans l'exemple illustré, les nervures 125 se rejoignent au niveau du fond 121 du récipient 120, par deux ou par trois.

Il est toutefois possible que les nervures 125 s'arrêtent en amont du fond 121 du récipient 120, sans se rejoindre.

Le récipient comporte par exemple dix à vingt, et ici quatorze, nervures 125.

Des rainures et/ou nervures 125 d'environ 7 mm de large et d'environ 2 mm de hauteur ont permis d'obtenir de bons résultats suite à des tests menés par les inventeurs. Par ailleurs, un espacement des rainures et/ou nervures 125 d'environ 20 mm est particulièrement avantageux selon ces mêmes tests.

Plus précisément, ici le récipient 120 de forme intérieure sensiblement prismatique hexagonale comprend deux faces intérieures 124a principales, qui sont opposées l'une à l'autre, tel que cela est visible plus en détail à la figure 3.

Chacune des faces intérieures 124a principales possède une section sensiblement en forme de V, formant une rigole centrale 126 sur chaque face intérieure 124a principale. La rigole centrale 126 a pour effet de permettre une meilleure évacuation mais également réception des aliments, solides et/ou liquides, contenus dans le récipient 120 ou respectivement destiné à y être reçus.

Le récipient 120 comprend également deux faces intérieures 124b latérales, qui sont opposées l'une à l'autre.

Entre quatre et huit parmi les dix à vingt nervures 125 (ou rainures, selon le mode de réalisation choisi), et en particulier six nervures 125, sont disposées sur chacune des faces intérieures 124a principales.

En particulier, les nervures 125 (ou rainures, selon le mode de réalisation choisi) sur chacune des faces intérieures 124a principales sont disposées en nombre égal de part et d'autre de la rigole centrale 126. Ici, trois nervures 125 sont disposées de chaque côté de la rigole centrale 126.

Entre une et deux nervures 125 (ou rainures, selon le mode de réalisation choisi), et en particulier une nervure 125, sont disposées sur chacune des faces intérieures 124b latérales.

Comme cela est visible sur la figure 3, le récipient 120 est sensiblement symétrique par rapport à un plan passant par le centre de chacune des faces intérieures 124b latérales, et le fond 121 du récipient 120. Il est toutefois envisageable que le récipient 120 soit asymétrique, avec notamment des nervures 125 de faces intérieures 124 opposées qui sont agencées en alternance, ou en quinconce, les unes par rapport aux autres.

Tel que cela est illustré à la figure 4, les nervures 125 peuvent avoir une section sensiblement en forme de cloche ou encore de courbe de Gauss. Ainsi, la surface des nervures 125 est continue avec les faces intérieures 124, les nervures 125 présentant un congé au niveau de leur jonction avec une face intérieure 124.

Les sections des nervures 125 peuvent toutefois également prendre toute autre forme telle qu'une forme semi-ovale, une forme hémisphérique, etc.

De manière similaire, des rainures peuvent avoir des formes de section équivalente, c'est-à-dire « négative », aux sections de nervures 125 précitées, et sont pratiquées dans les faces intérieures 124.

De telles formes de rainures ou nervures sont particulièrement hygiéniques, car elles évitent que des résidus s'y incrustent, et sont ainsi plus facilement nettoyables.

En variante (non représentée), les éléments de relief peuvent être des éléments saillants tels que des picots, tétons, dômes, ou tout autre type de protubérance, ou encore des dépressions, par exemple de forme hémisphériques, coniques, etc. Ici également, les éléments de relief sont par exemple disposés sur au moins une face intérieure 124 entre l'ouverture 123 du récipient 120 et le fond 121 du récipient 120. Les éléments de relief peuvent être disposés selon une répartition uniforme ou non entre l'ouverture 123 du récipient 120 et le fond 121 du récipient 120.

Les éléments de relief, notamment les nervures 125, permettent d'éviter que des aliments contenus dans le récipient 120 ne se collent aux faces intérieures 124, ce qui empêcherait leur bon déversement dans un module de cuisson 110.

En particulier, les éléments de relief permettent d'éviter un effet dit « ventouse » pouvant se produire sur une surface normalement sensiblement plane. Un tel risque est particulièrement important pour des aliments humides, et/ou mous, et/ou présentant une couche visqueuse ou grasse, tel que de la viande crue, en particulier la volaille crue, ou encore les fruits et légumes découpés.

Afin de réduire encore davantage ce risque, les éléments de relief du récipient 120 agissent en synergie avec la projection d'un jet de fluide pour décoller des aliments des faces intérieures 124 du récipient 120.

A cet effet, le système automatique 100 comporte au moins un module de projection 130 d'un fluide.

Chaque module de projection 130 est associé à un module de cuisson 110. Le système automatique 100 peut comprendre un module de projection 130 par module de cuisson 110, ou bien uniquement certains modules de cuisson 110 peuvent être associés à un module de projection 130.

Un module de projection 130 comprend au moins une buse de projection 131 de fluide.

La ou les buses de projection 131 de chaque module de projection 130 sont orientées de façon à être orientées en direction d'un récipient 120 lorsque celui-ci est en position de déversement en vis-à-vis du module de cuisson 110 associé au module de projection 130 en question.

La ou les buses de projection 131 sont aptes à projeter un jet de fluide en direction du récipient 120. Le jet de fluide s'introduit dans le récipient 120, et plus précisément dans un espace entre au moins une face intérieure 124 du récipient 120, et un aliment en contact avec l'au moins une face intérieure 124 et au moins un des éléments de relief présentés sur l'au moins une face intérieure 124.

Le jet de fluide s'introduisant dans cet espace, obtenu grâce aux éléments de relief, permet de décoller avec une efficacité décuplée les aliments des faces intérieures 124. Le déversement des aliments dans le module de cuisson 110 s'en trouve grandement amélioré, en étant plus fiable et rapide.

Le système automatique 100 comprend par exemple une structure de support 140 des modules de cuisson 110.

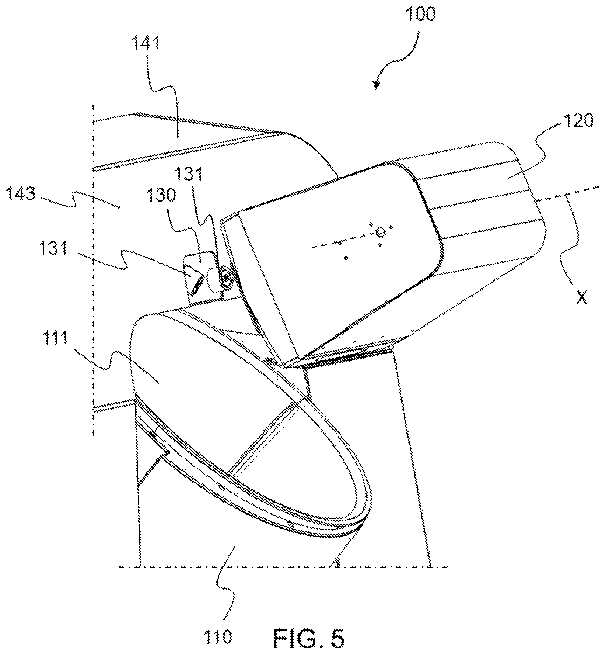

Selon une première variante de réalisation, illustrée aux figures 1, 5 et 6, le module de projection 130 est disposé sensiblement au-dessus d'un module de cuisson 110
A cet effet, la structure de support 140 peut comprendre un pont 141 de support, sur lequel le module de projection 130 peut être disposé. Le pont 141 repose ici sur un total de quatre piliers 142 de la structure de support 140.

Le pont 141 enjambe l'au moins un module de cuisson 110 du système automatique 100. Ici, tel qu'illustré à la figure 1 notamment, le pont 141 enjambe les trois modules de cuisson 110 (dont un seul est représenté).

Toutefois, les modules de projection 130 peuvent être disposés sur tout autre élément de support différent d'un pont 141, tant que ce dernier enjambe ou surplombe sensiblement le ou les modules de cuisson 110.

Plus précisément, le pont 141 peut comporter une face avant 143 orientée en direction du récipient 120. Ici, le module de projection 130 est disposé sur la face avant 141, de façon sensiblement centrale au-dessus du module de cuisson 110.

Le module de projection 130 comporte ici deux buses de projection 131.

Une première buse de projection 131 est orientée sensiblement en biais vers le haut, c'est-à-dire en éloignement du module de cuisson 110.

Une seconde buse de projection 131 est orientée sensiblement en biais vers le bas, c'est-à-dire vers le module de cuisson 110.

Les buses de projection 131 sont ici disposés côte à côte, sensiblement à une même hauteur au-dessus du module de cuisson 110. Il est toutefois envisageable de disposer les buses de projections 131 l'une au-dessus de l'autre, par exemple.

L'orientation des buses de projection 131 est telle qu'un jet de fluide projeté par chacune des buses atteigne l'intérieur du récipient 120 lorsque ce dernier est en position de déversement.

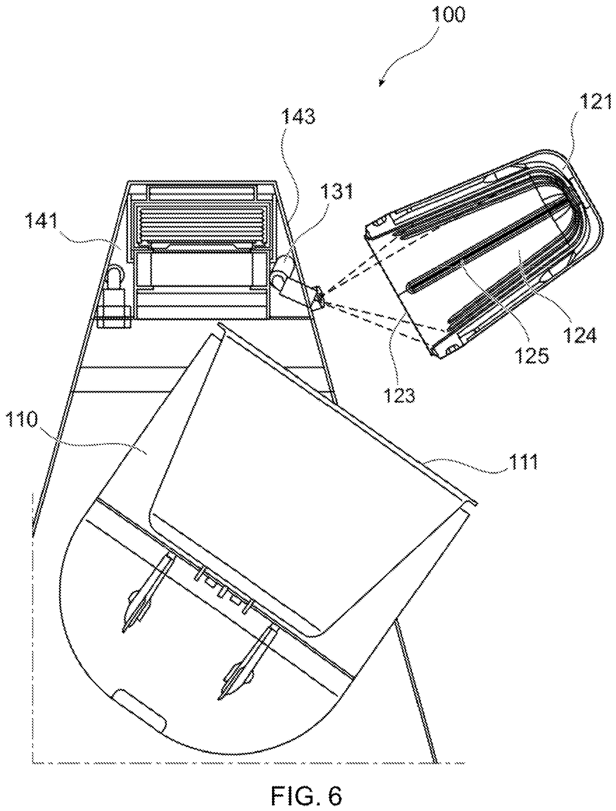

En particulier, la première buse de projection 131 est orientée de façon à ce qu'un jet de fluide projeté atteigne une première face intérieure 124a principale, et la seconde buse de projection 131 est orientée de façon à ce qu'un jet de fluide projeté atteigne une seconde face intérieure 124a principale, opposée à la première face intérieure 124a. La figure 6 illustre, en pointillé, une trajectoire exemplaire d'un jet de fluide projeté par les buses 131.

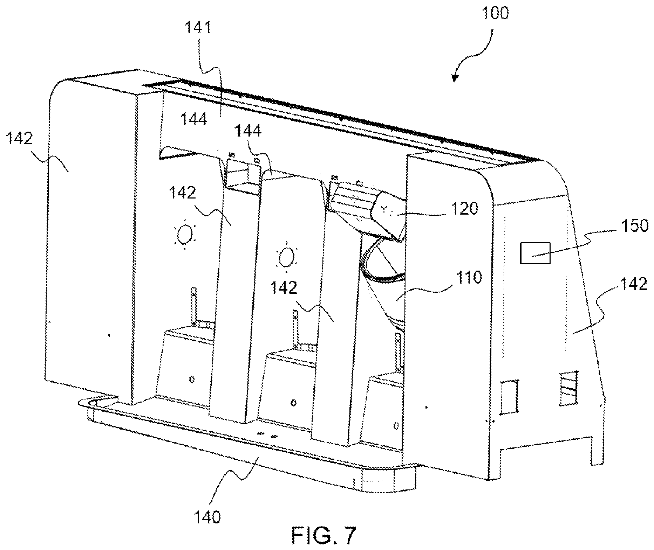

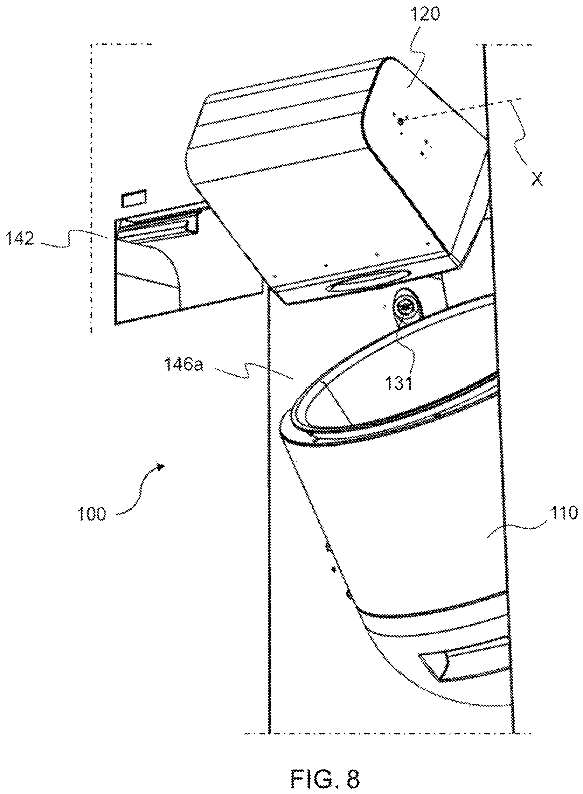

Selon une deuxième variante de réalisation, illustrée aux figures 7 à 10, le module de projection 130 est également disposé sensiblement au-dessus d'un module de cuisson 110. Toutefois, ici le module de propulsion 130 n'est plus positionné sur la face avant 143 du pont 141, mais le module de propulsion 130 est positionné sur des faces latérales intérieures des piliers 142.

On précise que le pont 140 comporte des pieds 144, ici au nombre de quatre, lui permettant de reposer sur des piliers 142 de la structure de support 140. Le pont 141 et le reste de la structure de support 140 peuvent également être formés ensemble, si bien qu'un pilier 142 de la structure 140 et un pied 144 du pont 141 peuvent être en prolongement direct l'un de l'autre, et peuvent être formés d'un seul tenant. La face latérale intérieure d'un pilier 142 peut donc correspondre à la face latérale intérieure d'un pied 144.

Selon la deuxième variante de réalisation, le module de propulsion 130 comporte deux buses de projection 131.

Dans l'exemple illustré, une première buse de projection 131 est disposée sur une face intérieure 145a d'un premier pilier 142, d'un premier côté au-dessus du module de cuisson 110, et une seconde buse de projection 131 est disposée sur une face intérieure 145b d'un deuxième pilier 151, d'un deuxième côté au-dessus du module de cuisson 110. De manière alternative, les première et deuxième buse de projection 131 peuvent être disposées sur des faces intérieures d'un premier pied 144 et d'un deuxième pied 144 du pont 140.

Les faces intérieures 145a et 145b sur lesquelles les buses de projection 131 sont disposées se faisant face, les buses de projection 131 se font sensiblement face également.

Ici également, l'orientation des buses de projection 131 est telle qu'un jet de fluide projeté par chacune des buses atteigne l'intérieur du récipient 120 lorsque ce dernier est en position de déversement.

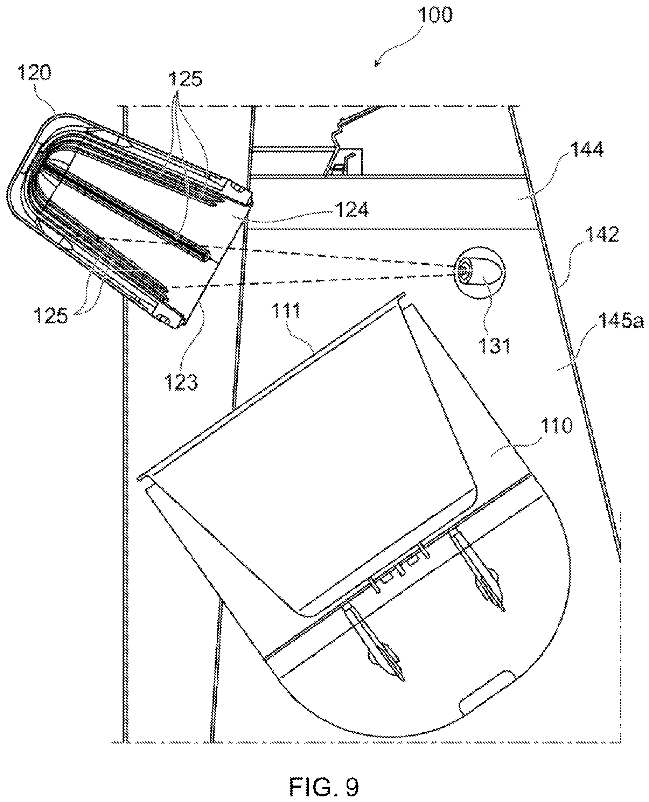

En particulier, la première buse de projection 131 est orientée de façon à ce qu'un jet de fluide projeté atteigne une première face intérieure 124a principale, et la seconde buse de projection 131 est orientée de façon à ce qu'un jet de fluide projeté atteigne une seconde face intérieure 124a principale, opposée à la première face intérieure 124a. La figure 9 illustre, en pointillé, une trajectoire exemplaire d'un jet de fluide projeté par une buse 131.

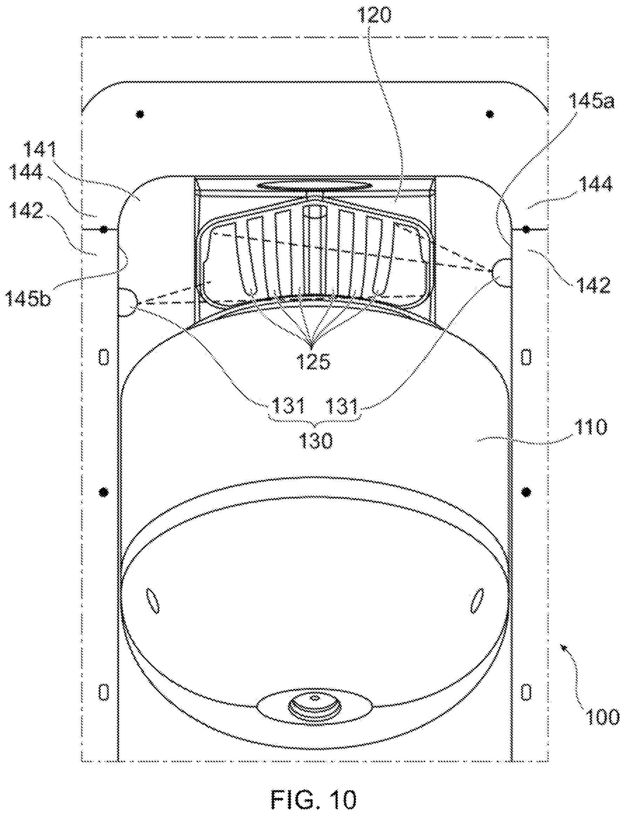

Tel que cela est illustré sur la figure 10, qui montre une vue arrière d'une partie du système automatique 100, les buses de projection 131 peuvent être décalées verticalement, c'est-à-dire qu'elles peuvent se trouver à une hauteur différente au-dessus du module de cuisson 110. Une première buse de projection 131 se trouve ainsi plus proche d'une première face intérieure 124a principale, et une deuxième buse de projection 131 se trouve plus proche d'une deuxième face intérieure 124a principale.

Quel que soit le mode de réalisation retenu, la buse de projection 131 dirigée vers la face intérieure 124 supérieure, en position de déversement, a tendance à créer un jet de fluide tourbillonnant ou tournoyant au fond du récipient 120 et lèche la face intérieure 124 supérieure, tandis que la buse de projection 131 dirigée vers la face intérieure 124 inférieure, en position de déversement, lèche ladite face intérieure 124 inférieure.

Quel que soit le mode de réalisation retenu en ce qui concerne l'emplacement des buses de projection 131, le module de projection 130 peut être configuré de sorte à ce qu'une première buse de projection 131 et une deuxième buse de projection 131 projettent des jets de fluide en alternance.

Ainsi, les aliments sont décollés en alternance d'un côté puis de l'autre côté dans le récipient 120, par des jets de fluide pénétrant dans le récipient 120 à des positions différentes, ce qui a pour effet un meilleur brassage de fluide dans le récipient 120, et ainsi un décollement amélioré.

Afin de renforcer davantage encore le mélange de fluide dans le récipient 120, le fond 121 du récipient 120 peut posséder une forme concave arrondie, de façon à favoriser la circulation d'un jet de fluide à l'intérieur du récipient 120.

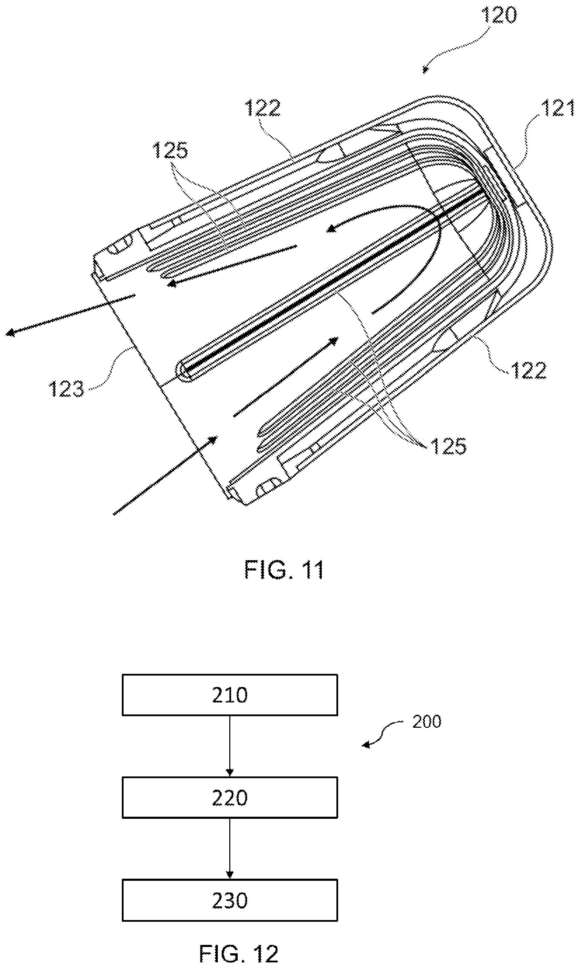

Par exemple, tel qu'illustré sur la figure 11 notamment, le fond 121 du récipient peut présenter une forme sensiblement de bol, de forme hémisphérique ou de forme en demi-ellipsoïde.

Ainsi, les faces intérieures 124 sont reliées entre elles par un fond 121 favorisant la circulation du fluide projeté par les buses de projection 131. Le fluide entrant sensiblement au niveau d'une face intérieure 124 est ainsi dirigé le long de la surface du fond 121 jusqu'à une face intérieure 124 opposée, par laquelle le fluide peut ressortir du récipient 120. En d'autres termes, une telle forme concave arrondie du fond 121 permet au fluide d'effectuer un demi-tour au fond du récipient 120 et de poursuivre son effet de décollement d'aliment sur d'autres parois intérieures 124a.

Une telle forme a également pour effet de favoriser la création d'un jet de fluide tourbillonnant, efficace pour décoller les aliments. Une telle forme est aussi plus hygiénique, car plus simple à nettoyer.

La figure 11 illustre schématiquement le parcours d'un jet de fluide (représenté sous la forme de flèches) à différent instants entre son entrée dans le récipient 120 et sa sortie du récipient 120.

On précise toutefois que le fluide peut être projeté sur une seule face intérieure 124 ou sur plus que deux faces intérieures 124, et ce au moyen d'une seul, ou de plusieurs, buses de projection 131.

En outre, un module de projection de fluide 130 peut être configuré pour pouvoir projeter du fluide en sortie d'au moins une des buses de projection 131 du module de projection de fluide 130 au moins à une première pression de sortie dite inférieure et à une seconde pression de sortie dite supérieure.

A cet effet, un circuit de fluide primaire (non représenté) peut être prévu dans le module de projection 130, ce circuit délivrant du fluide à un premier niveau de pression supérieur, par exemple à 8 bars, par exemple provenant d'un compresseur de fluide. Un circuit de fluide secondaire (non représenté) connecté au circuit de fluide primaire, et comprenant un limitateur de débit (non représenté) peut être prévu afin de délivrer du fluide à second niveau de pression inférieur, par exemple à 5 bars.

Le limitateur de pression peut être conçu de façon à être variable, de façon à faire varier le second niveau de pression inférieure. Le circuit de fluide secondaire peut également être conçu de manière à délivrer du fluide à un ou plusieurs niveaux de pression intermédiaires, de façon à affiner le nombre de niveaux de pression disponibles.

La projection du fluide avec une pression, et donc un débit, plus ou moins important permet d'adapter l'effet de décollement à différents types d'aliments. En particulier, il peut être évité que la force du jet de fluide soit trop importante, et projette des aliments violemment hors du récipient 120.

Les buses de projection 131 peuvent être de tout type. Par exemple, des buses à jet conique ou ponctuel peuvent être utilisés.

Toutefois, des buses de projection 131 de type buse à jet plat ou lame peuvent être préférentiellement utilisées.

Ainsi, un jet de fluide plat, affleurant au moins une face intérieure 124 du récipient 120, peut être projeté par au moins une des buses de projection 131. En d'autres termes, la buse de projection 131 est orientée de manière à ce que l'incidence du jet de fluide soit particulièrement faible, c'est-à-dire que le jet de fluide entre en contact avec une face intérieure 124 avec un angle proche de 0°.

De cette manière, le décollement d'un aliment adhérant à une face intérieure 124 du récipient 120 est favorisé. En effet, la lame de jet de fluide projetée permet de décoller efficacement un aliment collé à une face intérieure 124, la lame de jet agissant à la manière d'une spatule glissant sur la face intérieure 124.

D'autres types de buses de projection 131 peuvent toutefois être utilisés, comme par exemple des buses de projection de type mobile, c'est-à-dire dont la tête de projection peut entrer en mouvement par rapport à une partie fixe de la buse, lorsque la buse de projection est en utilisation. En particulier, une telle buse peut être de type buse rotative, c'est-à-dire qu'une tête de buse de la buse de projection peut projeter un jet de fluide dont l'orientation varie au cours de l'utilisation de la buse, et définit par exemple un cercle. De telles buses rotatives sont également d'une grande efficacité pour décoller des aliments des faces intérieures 124.

Notamment lorsqu'une buse de projection 131 de type mobile est utilisée, il est possible de ne prévoir qu'une seule buse de projection 131 par module de projection 130. En effet, une telle buse peut atteindre un plus grand nombre de faces intérieures 124 du récipient 120.

On précise ici que le système automatique 100 peut comprendre plusieurs modules de projection 130 comportant des types de buses de projection 131 différents, et même des modules de projection 130 comprenant lui-même différents types de buses de projection 131.

De préférence, le type de fluide projeté par les buses de projection 131 est de l'air. L'air a pour l'avantage de ne pas ou peu modifier les propriétés des aliments contenus dans le récipient 120, et d'être facilement disponible.

D'autres types de fluides peuvent toutefois être envisagés. Par exemple, des gaz, tels que l'azote, peuvent être projetés. Des liquides, tels que de l'eau ou de l'huile, peuvent être projetés également. Il est également envisageable de projeter de la vapeur d'eau.

On précise ici que le système automatique 100 peut comprendre plusieurs modules de projection 130 projetant des fluides différents, et même des modules de projection 130 projetant eux-mêmes chacun des fluides différents.

On précise également que pour piloter la projection de jets de fluide, notamment en ce qui regarde leur fréquence, leur alternance, leur durée et leur pression, le système automatique 100 comprend une unité de commande 150. L'unité de commande 150 est configurée, c'est-à-dire programmée, de sorte à projeter des jets de fluide selon les paramètres souhaités. L'unité de commande 150 est reliée par une connexion de données au moins aux modules de projection 130. L'unité de commande 150 peut correspondre à une unité de commande générale du système automatique 100, ou bien être elle-même reliée à une telle unité de commande générale et former une sous-unité de commande. L'unité de commande 150 peut être configurée pour adapter la projection de jets de fluide au type d'aliment contenus dans le récipient 120 devant être déversés dans un module de cuisson 110.

L'invention vise également un procédé 200 de déversement d'un aliment depuis le récipient 120 vers un module de cuisson 110, illustré par le schéma-bloc de la figure 12. Le procédé 200 est notamment mis en oeuvre au moyen d'une programmation correspondante de l'unité de commande 150.

Le procédé 200 comprend les étapes suivantes :
Dans une étape 210 de disposition du récipient 120 du module d'acheminement d'aliments, le récipient 120 est disposé sensiblement en vis-à-vis de l'ouverture 111 d'introduction d'aliments d'un module de cuisson 110. Au préalable, le récipient 120 est rempli d'aliments destinés à être préparés dans le module de cuisson 110.

Dans une étape 220 d'inclinaison du récipient 120, le récipient 120 est incliné autour de son axe de déversement X, en direction du module de cuisson 110. L'angle d'inclinaison choisi dépend de la configuration spécifique du système automatique 100, ainsi que du type de module de cuisson 110. Un angle d'inclinaison d'environ 60° vers le bas, par rapport à une position de référence dans laquelle l'ouverture 123 du récipient 120 est orientée vers le haut, peut être choisi ici. On précise que le module de cuisson 110 peut lui-même également être incliné légèrement en direction du récipient 120, tel que cela est illustré sur les figures 1 et 7 notamment.

Dans une étape 230 de projection d'un jet de fluide, un jet de fluide est projeté en direction du récipient 120 par au moins une buse de projection 131. Ainsi, le décollement d'un aliment d'au moins une face intérieure 124 du récipient est favorisé.

Tel que cela a été présenté plus en amont, lorsque le système automatique comporte deux buses de projection 131 par module de projection 130, chacune des buses de projection 131 peut projeter des jets de fluide en alternance.

Différents schémas de projection peuvent être envisagés, par exemple un jet d'une buse pour un jet de l'autre buse, un jet d'une buse pour deux jets de l'autre buse, etc., selon les besoins et le type d'aliment à décoller. La durée de projection de chacune des buses de projection 131 peut être identique, ou différente.

Par ailleurs, lorsqu'un module de projection 130 est configuré pour faire varier la pression de sortie d'une buse de projection 131, une buse de projection 131 peut projeter un jet de fluide d'un premier niveau de pression inférieur, puis d'un second niveau de pression supérieur, en alternance.

L'alternance de projection de fluide entre deux buses et à différents niveaux de pression peut être combinée. Ainsi, par exemple une première buse de projection 131 projette un jet de fluide à 5 bars pendant 1 seconde, une seconde buse de projection 131 projette un jet de fluide à 5 bars pendant 1 seconde, la première buse de projection 131 projette un jet de fluide à 8 bars pendant 1 seconde, une seconde buse de projection 131 projette un jet de fluide à 8 bars pendant 1 seconde. Les durées et pressions exemplaires ci-avant peuvent être adaptées au type d'aliment à décoller.

On précise également que pendant l'étape 230, le récipient 120 peut être basculé autour de l'axe de déversement X, autour de sa position de déversement sur une plage prédéfinie, par exemple de plus ou moins 5° autour de sa position de déversement, de façon à permettre au jet de fluide d'atteindre tous les aliments collés avec davantage de facilité.

On rappelle plus généralement que l'invention ne se limite pas aux exemples décrits ci-avant.

## Revendications

1. Système automatique (100) de préparation alimentaire comprenant un ou plusieurs modules de cuisson (110) comportant une ouverture (111) d'introduction d'aliments, et un module d'acheminement d'aliments comprenant au moins un récipient (120), le module d'acheminement d'aliments étant adapté pour positionner le récipient (120) sensiblement en vis-à-vis de l'ouverture (111) d'introduction d'aliments d'un module de cuisson (110), et le récipient (120) étant inclinable selon un axe déversement (X), de façon à pouvoir déverser des aliments qu'il contient dans un module de cuisson (110) à travers l'ouverture (111) d'introduction d'aliments, dans une position de déversement du récipient, **caractérisé en ce que** :
l'au moins un récipient (120) comporte, sur au moins une face intérieure (124), une pluralité d'éléments de relief (125) disposés entre une ouverture (123) du récipient (210) et un fond (121) du récipient (120), et **en ce que**
le système (100) comporte également au moins un module de projection (130) d'un fluide comprenant au moins une buse de projection (131) de fluide orientée en direction d'un récipient (120) lorsque celui-ci est en position de déversement, de manière à favoriser le décollement d'un aliment de ladite au moins une face intérieure (124) du récipient (120) par la projection d'au moins un jet de fluide s'introduisant dans un espace entre ladite au moins une face intérieure (124) dudit récipient (120), et ledit aliment en contact avec ladite au moins une face intérieure (124) et au moins un desdits éléments de relief (125).

2. Système automatique (100) selon la revendication 1, dans lequel les éléments de relief s'étendent sensiblement depuis l'ouverture (123) du récipient (120) jusqu'au fond (121) du récipient.

3. Système automatique (100) selon la revendication 2, dans lequel les éléments de relief sont des nervures (125) et/ou rainures s'étendant chacune sensiblement depuis l'ouverture (123) du récipient (120) jusqu'au fond (121) du récipient.

4. Système automatique (100) selon la revendication 3, dans lequel le récipient (120) comprend entre dix et vingt nervures (125) et/ou rainures réparties sur l'ensemble des faces intérieures (124) du récipient (120).

5. Système automatique (100) selon la revendication 4, dans lequel le récipient (120) comprend deux faces intérieures (124a) principales opposées et deux faces intérieures (124b) latérales opposées, et dans lequel entre quatre et huit nervures (125) et/ou rainures sont disposées sur chacune des faces intérieures (124a) principales, et une à deux nervures et/ou rainures sont disposées sur chacune des faces intérieures (124b) latérales.

6. Système automatique (100) selon la revendication 5, dans lequel chacune des faces intérieures (124a) principales possède une section sensiblement en forme de V, formant une rigole (126) centrale sur chaque face intérieure (124a) principale, les nervures (125) et/ou rainures sur chacune des faces intérieures (124a) principales étant disposées en nombre égal de part et d'autre de la rigole (126) centrale.

7. Système automatique (100) selon l'une quelconque des revendications 3 à 6, dans lequel le récipient (120) comprend uniquement des nervures (125).

8. Système automatique (100) selon l'une quelconque des revendications précédentes, dans lequel l'au moins un module de projection de fluide (130) comprend au moins deux buses de projection (131) orientées dans des directions distinctes, une première buse de projection (131) étant orientée sensiblement en direction d'une première face intérieure (124) du récipient (120) lorsque celui-ci est en position de déversement et une deuxième buse de projection (131) étant orientée sensiblement en direction d'une deuxième face intérieure (124) du récipient (120), opposée à la première face intérieure (124), lorsque celui-ci est en position de déversement.

9. Système automatique (100) selon la revendication 8, comprenant une unité de commande (150) configurée de sorte que la première buse de projection (131) et la deuxième buse de projection (131) projettent des jets de fluide en alternance.

10. Système automatique (100) selon l'une quelconque des revendications précédentes, dans lequel au moins un module de projection de fluide (130) est configuré pour pouvoir projeter du fluide en sortie d'au moins une des buses de projection (131) dudit module de projection de fluide (130) au moins à une première pression de sortie dite inférieure et à une seconde pression de sortie dite supérieure.

11. Système automatique (100) selon l'une quelconque des revendications précédentes, dans lequel au moins une buse de projection (131) est de type buse à jet plat ou lame, de façon à projeter un jet de fluide plat affleurant l'au moins une face intérieure (124) du récipient (120), de manière à favoriser le décollement d'un aliment adhérant à une face intérieure (124) du récipient (120).

12. Système automatique (100) selon l'une quelconque des revendications précédentes, dans lequel au moins une buse de projection (131) est de type mobile, préférentiellement de type buse rotative.

13. Système automatique (100) selon l'une quelconque des revendications précédentes, dans lequel au moins une buse de projection (131) est une buse de projection d'air.

14. Système automatique (100) selon l'une quelconque des revendications précédentes, dans lequel le fond (121) du récipient (120) possède une forme concave arrondie, de façon à favoriser la circulation d'un jet de fluide à l'intérieur du récipient (120).

15. Procédé (200) de déversement d'un aliment depuis un récipient (120) vers un module de cuisson (110), mis en oeuvre par un système automatique (100) selon l'une quelconque des revendications précédentes, comprenant les étapes de :
- disposition (210) d'un récipient (120) du module d'acheminement d'aliments sensiblement en vis-à-vis de l'ouverture (111) d'introduction d'aliments d'un module de cuisson (110);
- inclinaison (220) du récipient (120) autour de son axe de déversement (X), en direction du module de cuisson (110);
- projection (230) d'un jet de fluide en direction du récipient (120) par au moins une buse de projection (131),
de manière à manière à favoriser le décollement d'un aliment d'au moins une face intérieure (124) du récipient (120).

## Patentansprüche

1. Automatisches Lebensmittelzubereitungssystem (100), umfassend ein oder mehrere Kochmodule (110), die eine Lebensmitteleinführöffnung (111) umfassen, und ein Lebensmittelzuführmodul, das mindestens einen Behälter (120) umfasst, wobei das Lebensmittelzuführmodul dazu ausgelegt ist, den Behälter (120) im Wesentlichen gegenüber der Lebensmitteleinführöffnung (111) eines Kochmoduls (110) zu positionieren, und wobei der Behälter (120) entlang einer Ausgießachse (X) neigbar ist, so dass er darin enthaltene Lebensmittel durch die Lebensmitteleinführöffnung (111) in eine Ausgießstellung des Behälters in ein Kochmodul (110) ausgießen kann, **dadurch gekennzeichnet, dass**:
der mindestens eine Behälter (120) an mindestens einer Innenseite (124) eine Vielzahl von Erhebungselementen (125) aufweist, die zwischen einer Öffnung (123) des Behälters (210) und einem Boden (121) des Behälters (120) angeordnet sind, und dass
das System (100) weiter mindestens ein Fluidspritzmodul (130) aufweist, das mindestens eine Fluidspritzdüse (131), die in Richtung eines Behälters (120) gerichtet ist, wenn sich dieser in der Ausgießstellung befindet, so dass das Ablösen eines Lebensmittels von der mindestens einen Innenseite (124) des Behälters (120) durch das Ausstoßen von mindestens einem Fluidstrahl begünstigt wird, der in einen Raum zwischen der mindestens einen Innenseite (124) des Behälters (120) eintritt, und wobei das Lebensmittel mit der mindestens einen Innenseite (124) und mindestens einem der Reliefelemente (125) in Kontakt steht.

2. Automatisches System (100) nach Anspruch 1, wobei sich die Reliefelemente im Wesentlichen von der Öffnung (123) des Behälters (120) bis zum Boden (121) des Behälters erstrecken.

3. Automatisches System (100) nach Anspruch 2, wobei die Reliefelemente Rippen (125) und/oder Nuten sind, die sich jeweils im Wesentlichen von der Öffnung (123) des Behälters (120) bis zum Boden (121) des Behälters erstrecken.

4. Automatisches System (100) nach Anspruch 3, wobei der Behälter (120) zwischen zehn und zwanzig Rippen (125) und/oder Nuten umfasst, die über alle Innenseiten (124) des Behälters (120) verteilt sind.

5. Automatisches System (100) nach Anspruch 4, wobei der Behälter (120) zwei gegenüberliegende Hauptinnenseiten (124a) und zwei gegenüberliegende Seiteninnenseiten (124b) umfasst, und wobei zwischen vier und acht Rippen (125) und/oder Nuten an jeder der Hauptinnenseiten (124a) angeordnet sind, und eine bis zwei Rippen und/oder Nuten an jeder der Seiteninnenseiten (124b) angeordnet sind.

6. Automatisches System (100) nach Anspruch 5, wobei jede der Hauptinnenseiten (124a) einen im Wesentlichen V-förmigen Abschnitt aufweist, der eine zentrale Rinne (126) auf jeder Hauptinnenseite (124a) bildet, wobei die Rippen (125) und/oder Nuten auf jeder der Hauptinnenseiten (124a) auf beiden Seiten der zentralen Rinne (126) in gleicher Anzahl angeordnet sind.

7. Automatisches System (100) nach einem der Ansprüche 3 bis 6, wobei der Behälter (120) ausschließlich Rippen (125) umfasst.

8. Automatisches System (100) nach einem der vorhergehenden Ansprüche, wobei das mindestens eine Fluidspritzmodul (130) mindestens zwei in unterschiedliche Richtungen ausgerichtete Spritzdüsen (131) umfasst, wobei eine erste Spritzdüse (131) im Wesentlichen in Richtung einer ersten Innenseite (124) des Behälters (120) ausgerichtet ist, wenn dieser sich in der Ausgießstellung befindet, und eine zweite Spritzdüse (131) im Wesentlichen in Richtung einer zweiten Innenseite (124) des Behälters (120) ausgerichtet ist, die der ersten Innenseite (124) gegenüberliegt, wenn sich dieser in der Ausgießstellung befindet.

9. Automatisches System (100) nach Anspruch 8, umfassend eine Steuereinheit (150), die so ausgebildet ist, dass die erste Spritzdüse (131) und die zweite Spritzdüse (131) abwechselnd Fluidstrahlen ausstoßen.

10. Automatisches System (100) nach einem der vorhergehenden Ansprüche, wobei mindestens ein Fluidspritzmodul (130) so ausgebildet ist, dass es Fluid aus mindestens einer der Spritzdüsen (131) des Fluidspritzmoduls (130) mit mindestens einem ersten, sogenannten niedrigeren Ausgangsdruck und einem zweiten, sogenannten höheren Ausgangsdruck ausstoßen kann.

11. Automatisches System (100) nach einem der vorhergehenden Ansprüche, wobei mindestens eine Spritzdüse (131) vom Typ Flachstrahldüse oder Klingendüse ist, um einen flachen Fluidstrahl auszustoßen, der bündig mit der mindestens einen Innenseite (124) des Behälters (120) ist, um das Ablösen eines Lebensmittels zu begünstigen, das an einer Innenseite (124) des Behälters (120) haftet.

12. Automatisches System (100) nach einem der vorhergehenden Ansprüche, wobei mindestens eine Spritzdüse (131) beweglich, vorzugsweise rotierend ist.

13. Automatisches System (100) nach einem der vorhergehenden Ansprüche, wobei mindestens eine Spritzdüse (131) eine Luftspritzdüse ist.

14. Automatisches System (100) nach einem der vorhergehenden Ansprüche, wobei der Boden (121) des Behälters (120) eine abgerundete konkave Form aufweist, um die Zirkulation eines Fluidstrahls innerhalb des Behälters (120) zu begünstigen.

15. Verfahren (200) zum Ausgießen eines Lebensmittels aus einem Behälter (120) in ein Kochmodul (110), das durch ein automatisches System (100) nach einem der vorhergehenden Ansprüche umgesetzt wird, umfassend folgende Schritte:
- Anordnen (210) eines Behälters (120) des Lebensmittelzuführmoduls im Wesentlichen gegenüber der Lebensmitteleinführöffnung (111) eines Kochmoduls (110);
- Neigen (220) des Behälters (120) um seine Ausgießachse (X), in Richtung Kochmodul (110);
- Ausstoßen (230) eines Fluidstrahls in Richtung des Behälters (120) durch mindestens eine Spritzdüse (131)
so dass ein Ablösen eines Lebensmittels von mindestens einer Innenseite (124) des Behälters (120) begünstigt wird.

## Claims

1. Automatic food preparation system (100) comprising one or more cooking modules (110) having a food introduction opening (111), and a food supply module comprising at least one container (120), the food supply module being adapted to position the container (120) substantially opposite the food introduction opening (111) of a cooking module (110), and the container (120) being tiltable about a discharge axis (X), so as to be able to discharge food that it contains into a cooking module (110) through the food introduction opening (111) in a discharge position of the container, **characterised in that**:
the at least one container (120) has, on at least one inner face (124), a plurality of relief elements (125) arranged between an opening (123) of the container (210) and a bottom (121) of the container (120), and **in that**
the system (100) also comprises at least one module (130) for spraying a fluid, comprising at least one fluid spray nozzle (131) oriented in the direction of a container (120) when it is in the dispensing position, so as to facilitate the release of food from said at least one inner face (124) of the container (120) by spraying at least one jet of fluid into a space between said at least one inner face (124) of said container (120) and the food in contact with said at least one inner face (124) and at least one of said relief elements (125).

2. Automatic system (100) according to claim 1, wherein the relief elements extend substantially from the opening (123) of the container (120) as far as the bottom (121) of the container.

3. Automatic system (100) according to claim 2, wherein the relief elements are ribs (125) and/or grooves, each extending substantially from the opening (123) of the container (120) as far as the bottom (121) of the container.

4. Automatic system (100) according to claim 3, wherein the container (120) comprises between ten and twenty ribs (125) and/or grooves distributed over all of the inner faces (124) of the container (120).

5. Automatic system (100) according to claim 4, wherein the container (120) comprises two opposite main inner faces (124a) and two opposite lateral inner faces (124b), and wherein between four and eight ribs (125) and/or grooves are arranged on each of the main inner faces (124a) and one to two ribs and/or grooves are arranged on each of the lateral inner faces (124b).

6. Automatic system (100) according to claim 5, wherein each of the main inner faces (124a) has a substantially V-shaped section forming a central channel (126) on each main inner face (124a), the ribs (125) and/or grooves on each of the main inner faces (124a) being arranged in an equal number on either side of the central channel (126).

7. Automatic system (100) according to any one of claims 3 to 6, wherein the container (120) comprises only ribs (125).

8. Automatic system (100) according to any one of the preceding claims, wherein the at least one fluid spray module (130) comprises at least two spray nozzles (131) oriented in different directions, a first spray nozzle (131) being oriented substantially in the direction of a first inner face (124) of the container (120) when it is in the dispensing position, and a second spray nozzle (131) being oriented substantially in the direction of a second inner face (124) of the container (120) opposite the first inner face (124), when it is in the dispensing position.

9. Automatic system (100) according to claim 8, comprising a control unit (150) configured in such a way that the first spray nozzle (131) and the second spray nozzle (131) spray fluid jets alternately.

10. Automatic system (100) according to any one of the preceding claims, wherein at least one fluid spray module (130) is configured to be able to spray fluid at the outlet of at least one of the spray nozzles (131) of said fluid spray module (130) at least at a first lower outlet pressure, referred to as the lower outlet pressure, and at a second outlet pressure, referred to as the higher outlet pressure.

11. Automatic system (100) according to any one of the preceding claims, wherein at least one spray nozzle (131) is of the flat-jet or blade type in order to spray a flat fluid jet level with the at least one inner face (124) of the container (120) so as to facilitate the detachment of food adhering to an inner face (124) of the container (120).

12. Automatic system (100) according to any one of the preceding claims, wherein at least one spray nozzle (131) is of the movable type, preferably of the rotary nozzle type.

13. Automatic system (100) according to any one of the preceding claims, wherein at least one spray nozzle (131) is an air spray nozzle.

14. Automatic system (100) according to any one of the preceding claims, wherein the bottom (121) of the container (120) has a rounded concave shape so as to facilitate the circulation of a fluid jet within the container (120).

15. Method (200) for discharging food from a container (120) to a cooking module (110), carried out by an automatic system (100) according to any one of the preceding claims, comprising the steps of:
- arranging (210) a container (120) of the food supply module substantially facing the food introduction opening (111) of a cooking module (110);
- tilting (220) the container (120) about its discharge axis (X) in the direction of the cooking module (110);
- spraying (230) a fluid jet in the direction of the container (120) by at least one spray nozzle (131),
so as to facilitate the detachment of food from at least one inner face (124) of the container (120).
